# FASCICULE DE BREVET EUROPEEN

(11) **EP 3 497 014 B1**
(45) Date de publication et mention de la délivrance du brevet: **27.10.2021**
(21) Numéro de dépôt: 17746507.7
(22) Date de dépôt: 06.08.2017
(51) Int. Cl.: B64C 27/00, B64D 17/22, B64D 17/80

(54) **AERODYNE A VOILURE TOURNANTE AVEC PARACHUTE**
TRAGSCHRAUBER MIT FALLSCHIRM
HELICOPTER WITH PARACHUTE

(30) Priorité: 08.08.2016 FR 1657621
(43) Date de publication de la demande: 19.06.2019
(73) Titulaire: Heli-Tech, 26600 Tain L'Hermitage (FR)
(72) Inventeur: JEAN-FULCRAND, Pascal, 07210 Baix (FR)
(74) Mandataire: Cabinet Laurent & Charras
(86) Numéro de dépôt international: PCT/EP2017/069876
(87) Numéro de publication internationale: WO 2018/029119

(56) Documents cités:
- EP-A1- 2 570 348
- DE-U1-202012 104 809
- FR-A1- 3 003 844
- US-B1- 6 199 799

## Description

### DOMAINE TECHNIQUE

La présente invention concerne le domaine des aérodynes à voilure tournante tels que les autogires et les hélicoptères.

L'invention concerne plus particulière les aérodynes à voilure tournante intégrant un parachute qui, une fois déployé, est apte à supporter le poids de l'aérodyne.

### ART ANTERIEUR

Un aérodyne comporte classiquement une structure, par exemple tubulaire, supportant au moins un moteur et au moins un siège passager. La portance de l'aérodyne est assurée par au moins deux pales mobiles en rotation au-dessus de la structure. Les pales sont fixées sur un rotor entrainé par le moteur par l'intermédiaire d'un arbre de transmission.

Le déplacement de l'aérodyne est assuré par une modification de l'orientation des pales au moyen d'un plateau cyclique disposé autour de l'arbre de transmission entre le rotor et la structure. L'aérodyne intègre une cabine de pilotage pourvue d'un manche apte à modifier l'orientation du plateau cyclique afin de commander les déplacements de l'aérodyne.

Il existe des situations critiques dans lesquelles un aérodyne devient incontrôlable, dégradation des commandes du plateau cyclique, problème moteur... Ces situations peuvent entraîner le crash de l'aérodyne. En outre, en raison de la présence de la voilure tournante au-dessus de la cabine d'un aérodyne il n'est généralement pas possible aux passagers de s'extraire de l'aérodyne avec un parachute sans entrer en collision avec la voilure tournante.

Pour améliorer les chances de survie des passagers, il existe des hélicoptères intégrant un parachute destiné à supporter le poids de l'aérodyne et des passagers.

Un parachute comporte une voilure et des suspensions. Il est généralement positionné au-dessus du rotor afin d'éviter que les suspensions n'entrent en collision avec les pales. Les suspensions sont fixées au-dessus du rotor sur un point fixe par rapport à la structure de l'aérodyne. Le déploiement du parachute est assuré par une fusée commandée depuis la cabine de sorte à déployer rapidement la voilure du parachute. Ce type de dispositif est décrit dans le brevet américain N° US 2 812 147.

En variante, le modèle d'utilité chinois N° CN 2 444 879 décrit un hélicoptère intégrant un parachute intégrant une sangle de suspension passant par un évidement de l'arbre de transmission. Cette sangle de suspension est fixée sur la structure de l'hélicoptère. Le document US6199799B1 montre un dispositif selon le préambule de la revendication 1.

Le déclenchement du parachute a souvent pour conséquence de rendre inopérantes les commandes de l'aérodyne car les pales n'assurent plus la portance de l'aérodyne. Il s'ensuit que le parachute doit être le plus fiable possible.

Lors d'une avarie importante, une pale peut se désolidariser du rotor entraînant une poussée de l'ordre de 10 tonnes sur les pales restantes. Il s'ensuit un important phénomène de balourd qui désaxe l'arbre de transmission et risque de détruire les éléments présents entre le rotor et la structure. Dans ce cas très défavorable, lorsque le parachute est fixé au-dessus du rotor, il risque de se décrocher et les suspensions risquent d'être découpées par les débris des pales. En outre, lorsque le parachute est fixé sur la structure de l'hélicoptère, l'axe de transmission peut également frotter sur la sangle de suspension jusqu'à la découper.

Il existe donc un problème technique visant à garantir l'intégrité de la fixation d'un parachute d'un hélicoptère lors de la désolidarisation d'une pale de l'arbre de transmission.

Pour répondre à ce problème technique, il est connu d'utiliser des pales éjectables au niveau de l'arbre de transmission. Cependant, l'utilisation de pales éjectables nécessite une installation complexe. A ce jour, seul le domaine militaire est capable de mettre en œuvre ce type de pales éjectables avec les sécurités requises.

### EXPOSE DE L'INVENTION

La présente invention propose une variante à l'utilisation des pales éjectables au moyen d'un câble de suspension dont la structure permet de supporter les frottements d'un axe de transmission pouvant découper une suspension classique.

A cet effet, l'invention concerne un aérodyne selon la revendication 1.

L'inventeur a constaté que cette solution est particulièrement efficace pour répondre au problème technique du découpage de l'élément de suspension lors de la dislocation de l'arbre de transmission. En effet, un câble en acier est particulièrement résistant pour supporter les sollicitations en cisaillement. En outre, la structure multibrin du câble lui permet de se déformer facilement pour absorber les sollicitations en cisaillement. La résistance à la traction d'au moins 150 daN/mm² assure quand-à-elle le maintien de l'aérodyne même lorsque le phénomène de balourd augmente largement la sollicitation en traction du câble.

Il s'ensuit que l'invention permet de garantir la liaison entre la voilure du parachute et la structure de l'aérodyne même lors d'une avarie importante.

Lorsqu'une pale de désolidarise du rotor, il existe phénomène transitoire dans lequel les éléments présents entre le parachute et la structure de l'aérodyne risquent de se désintégrer et de découper le câble. Même dans les cas les plus défavorables dans lesquels l'arbre de transmission frotte contre le câble de suspension, il découpe successivement et lentement les brins permettant au câble de résister jusqu'à la fin du phénomène transitoire.

En outre, cette solution est particulièrement contre-intuitive pour un homme du métier qui cherche à réaliser un aérodyne car l'utilisation d'un câble en acier impact négativement le poids d'un aérodyne. Or, un homme du métier qui cherche à réaliser un aérodyne est en constante recherche de limitation du poids.

Selon un mode de réalisation, ledit câble présente une souplesse lui permettant de se courber sur un rayon inférieur ou égal à dix fois son diamètre sans atteindre sa limite élastique en flexion. Ce mode de réalisation permet au câble d'absorber les contraintes en cisaillement.

Selon un mode de réalisation, ledit câble présente une limite à la rupture en traction supérieure à dix fois la masse maximum autorisée dudit aérodyne alors qu'une section dudit câble est réduite de 95%. Pour réaliser cette mesure, il suffit de découper 95% de la section métallique du câble et de réaliser un test en traction. Ce mode de réalisation permet de garantir la liaison entre le parachute et l'aérodyne même lorsque l'arbre de transmission frotte sur le câble et découpe une partie importante des brins du câble multibrins.

Selon un mode de réalisation, ledit parachute intègre un extracteur, ledit extracteur étant commandé manuellement depuis une cabine de pilotage de l'aérodyne. Ce mode de réalisation permet au pilote d'extraire le parachute lorsqu'il détecte la survenance d'une avarie qu'il ne pourra pas maîtriser.

Selon un mode de réalisation, ledit extracteur est commandé par un câble de déclenchement passant dans ledit mât. Ce mode de réalisation permet de réutiliser l'évidement du mât pour passer une commande manuelle.

Selon un mode de réalisation, ledit extracteur est commandé par un contacteur électrique, ledit contacteur électrique étant relié à ladite cabine de pilotage par au moins un fil électrique passant dans ledit mât. Ce mode de réalisation permet de réutiliser l'évidement du mât pour passer un fil électrique.

Selon un mode de réalisation, ledit extracteur est commandé par des moyens de transmission sans fil. Ce mode de réalisation permet d'éviter la perturbation du passage du câble de suspension dans le mât par un fil électrique ou un câble de déclenchement manuel.

Selon un mode de réalisation, ledit parachute intègre un extracteur, ledit extracteur étant commandé automatiquement lorsque certains paramètres anormaux sont détectés. Ce mode de réalisation permet de déclencher automatiquement le parachute en cas de malaise du pilote ou lorsque la force centrifuge est telle que le pilote n'est pas en mesure d'atteindre la commande de déclenchement manuelle.

Selon un mode de réalisation, ledit extracteur est réalisé par un dispositif mécanique à percuteur configuré pour assurer l'extraction dudit parachute lorsque ledit rotor présente une accélération latérale supérieure à une valeur seuil.

Selon un mode de réalisation, ledit extracteur est réalisé par un dispositif électromécanique à commutateur configuré pour assurer l'extraction dudit parachute lorsque ledit rotor présente une accélération latérale supérieure à une valeur seuil.

Selon un mode de réalisation, ledit extracteur est réalisé par un dispositif électronique configuré pour assurer l'extraction dudit parachute lorsque ledit aérodyne présente une accélération angulaire supérieure à une valeur seuil.

Selon un mode de réalisation, ledit extracteur comporte un premier déclencheur commandé manuellement depuis une cabine de pilotage de l'aérodyne et un second déclencheur commandé automatiquement lorsque certains paramètres anormaux sont détectés.

Selon un mode de réalisation, ledit câble de suspension est fixé à ladite structure par au moins deux liens de fixation reliés à deux points de fixation distincts de ladite structure. Ce mode de réalisation permet de maintenir le câble de suspension si un des deux liens de fixation venait à rompre. En outre, la structure peut subir des détériorations lors de la désintégration de l'arbre de transmission. Ce mode de réalisation permet de maintenir ledit câble même lorsqu'une partie de la structure est endommagée.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 3 représentent :
- Figure 1 : une vue de côté d'un aérodyne soutenu par un parachute selon un mode de réalisation de l'invention ;
- Figure 2 : une représentation schématique en coupe de l'aérodyne de la figure 1 ; et
- Figure 3 : une représentation schématique en coupe partielle de la colonne de transmission de l'aérodyne de la figure 1.

### DESCRIPTION DETAILLEE DE L'INVENTION

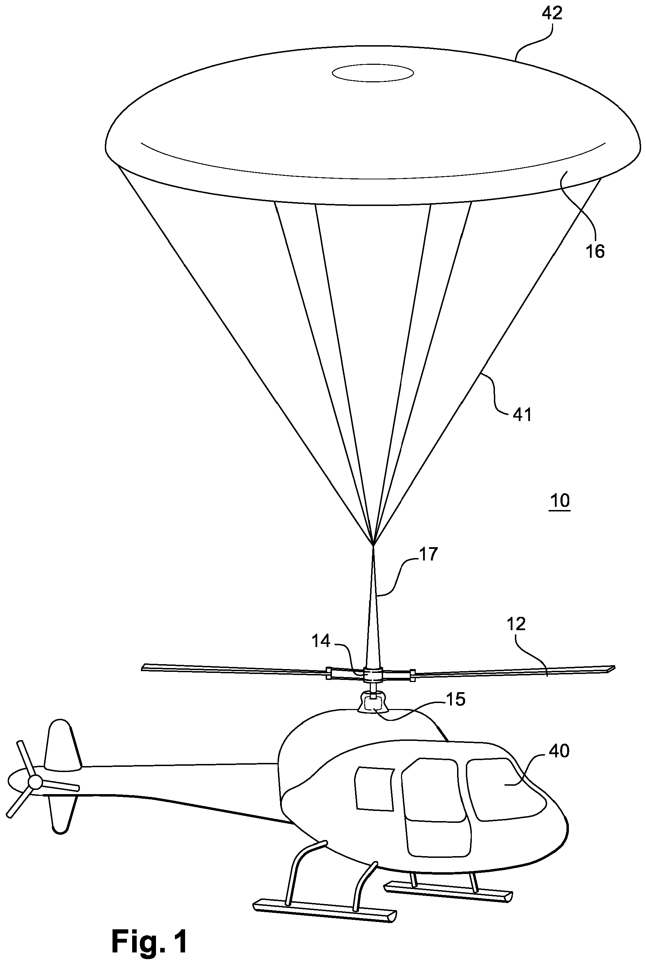

Les figures 1 à 3 illustrent un aérodyne **10** comportant une structure **11** tubulaire métallique supportant au moins un siège passager ainsi qu'un moteur **35**. Le moteur **35** entraine en rotation un rotor **14**, disposé au-dessus de la structure **11**, au moyen d'un arbre de transmission **13**. La portance de l'aérodyne **10** est assurée par deux pales **12** fixées sur le rotor **14**.

Le déplacement de l'aérodyne **10** est assuré par une modification de l'orientation des pales **12** au moyen d'un plateau cyclique **15** disposé autour de l'arbre de transmission **13** entre le rotor **14** et la structure **11**. L'aérodyne **10** intègre une cabine de pilotage **40** pourvue d'un manche apte à modifier l'orientation du plateau cyclique **15** afin de commander les déplacements de l'aérodyne **10**.

L'arbre de transmission **13** est une pièce métallique creuse à l'intérieure de laquelle un mât **30** est inséré. Le mât **30** est fixé sur la structure **11** et l'arbre de transmission **13** est mobile en rotation autour du mât **30.** Le rotor **14** ainsi que le plateau cyclique **15** présentent un évidemment central à l'intérieur duquel le mât **30** est inséré. Le mât **30** s'entend ainsi au-dessus du rotor **14** de sorte à fixer un parachute **16** solidaire avec la structure **11**.

Plus précisément, le parachute **16** est intégré dans un caisson **31** intégrant la voilure **42** du parachute **16** ainsi que ses suspentes **41** et les éléments d'extraction du parachute **16** du caisson **31.** Tel qu'illustré sur la figure 1, lorsque le parachute **16** est déployé, les suspentes **41** relient différents points de la voilure **42** à un câble de suspension **17**. La forme du parachute **16** peut varier sans changer l'invention. Par exemple, le parachute **16** peut comporter plusieurs voilures **42**.

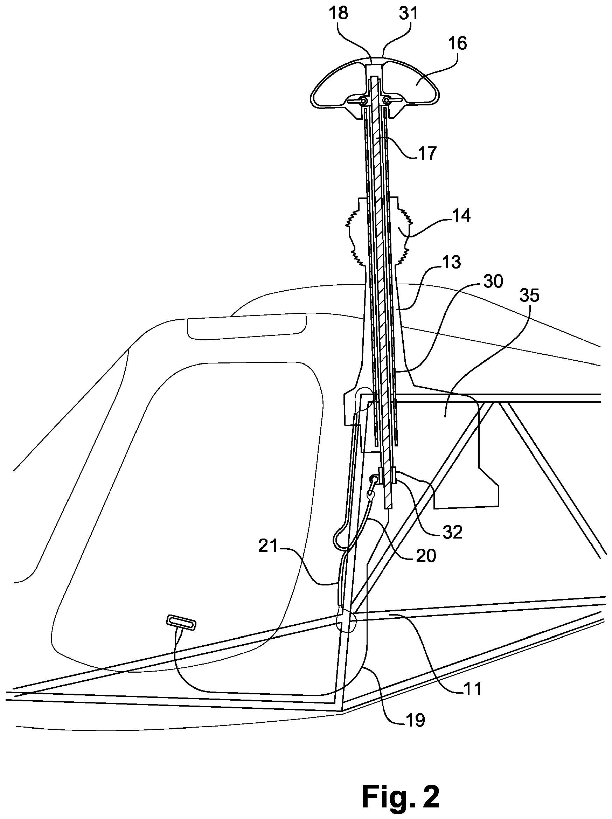

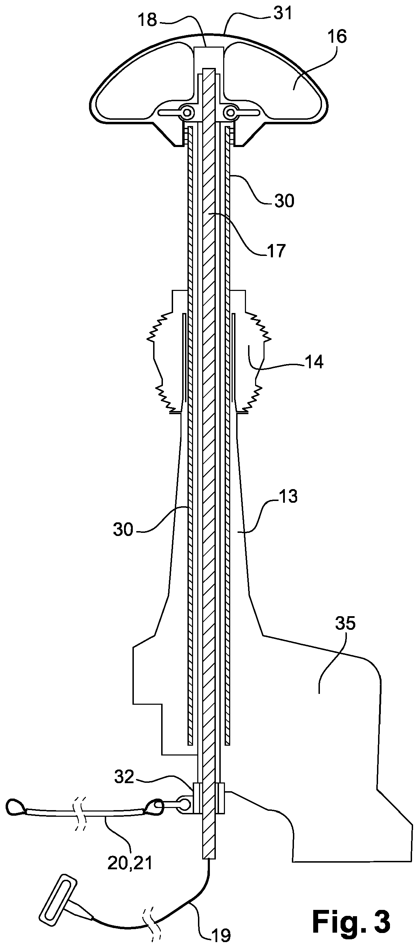

Le câble de suspension **17** passe dans le mât **30** pour être fixé sur la structure **11** de l'aérodyne **10**. Le câble de suspension **17** peut être fixé à la structure **11** en utilisant tous les moyens connus. Les figures 2 et 3 illustrent un mode de réalisation dans lequel le câble de suspension **17** est fixé par une manille **32** enserrant le câble de suspension **17**. La manille **32** est reliée à deux liens de fixation **20**, **21** reliés à deux points de fixation distincts de la structure **11**. Un premier lien de fixation **20** enserre un tube de la structure **11** proche du moteur **35**. Un second lien de fixation **21** enserre un tube de la structure **11** proche du plancher de l'aérodyne **10**.

Le câble de suspension **17** est un élément essentiel à l'invention car il permet de résister à la détérioration des pales **12**, du mât **30** et/ou de l'arbre de transmission **13**. Pour ce faire, le câble de suspension **17** est réalisé par un câble multibrins en acier dont la résistance en traction est supérieure à 150 daN/mm². De préférence, le câble de suspension **17** présente une souplesse lui permettant de se courber sur un rayon inférieur ou égal à dix fois son diamètre sans atteindre sa limite élastique en flexion. De préférence, le câble de suspension **17** présente une limite à la rupture en traction supérieure à dix fois la masse maximum autorisée dudit aérodyne alors qu'une section dudit câble **17** est réduite de 95%. Par exemple, un câble de levage avec une section de 20 mm peut être utilisé.

Les éléments d'extraction du parachute **16** du caisson **31** comportent un extracteur **18**, par exemple une fusée, et un mécanisme déclencheur de l'extracteur **18**. Le mécanisme déclencheur peut être mécanique, électrique ou électronique. Par exemple, tel qu'illustré sur les figures 2 et 3, le mécanisme déclencheur peut être réalisé par un câble de déclenchement **19** passant dans ledit mât **30**. La section du câble de déclenchement **19** est très inférieure à celle du câble de suspension **17** car le câble de déclenchement **19** peut être coupé sans préjudices après l'ouverture du parachute **17**. Typiquement, la section du câble de déclenchement **19** peut être de l'ordre de 1 ou 2 mm. Ce câble de déclenchement **19** permet d'assurer une commande manuelle de l'ouverture du parachute **16** depuis la cabine de pilotage **40**.

En variante, une commande manuelle de l'ouverture du parachute **16** peut être réalisée par un contacteur électrique au moyen d'un fil électrique passant dans le mât **30**. En variante, une commande manuelle peut être réalisée par des moyens de transmission sans fil. Un émetteur sans fil est alors disposé dans la cabine de pilotage **40** et un récepteur est disposé au niveau du parachute **16**.

En outre, l'ouverture du parachute **16** peut également être commandée automatiquement lorsque certains paramètres anormaux sont détectés. Le déclenchement automatique peut être réalisé par un dispositif mécanique à percuteur configuré pour assurer l'extraction du parachute **16** lorsque le rotor **14** présente une accélération latérale supérieure à une valeur seuil. A cet effet, un capteur gyroscopique est intégré au niveau du déclencheur. En variante, le déclenchement automatique peut être réalisé par un dispositif électromécanique à commutateur configuré pour assurer l'extraction du parachute **16** lorsque le rotor **14** présente une accélération latérale supérieure à une valeur seuil. En variante, le déclenchement automatique peut être réalisé par un dispositif électronique configuré pour assurer l'extraction du parachute **16** lorsque l'aérodyne **10** présente une accélération angulaire supérieure à une valeur seuil. A cet effet, un capteur gyroscopique est intégré au niveau de la structure de l'aérodyne **10**.

Lorsque le déclencheur et/ou l'extracteur intègrent un ou plusieurs accumulateurs électriques intervenants dans leurs fonctionnements, la cabine de pilotage **40** comporte un indicateur de charge des accumulateurs.

De préférence, l'aérodyne **10** intègre deux moyens de déclenchement du parachute **16**, une commande manuelle par le pilote et une commande automatique si le pilote n'est pas apte à déclencher manuellement l'extraction du parachute **16**.

L'invention permet ainsi d'assurer une sécurité renforcée pour les passagers au moyen d'un parachute **16** résistant aux avaries importantes pouvant survenir entre le parachute **16** et la structure **11**.

## Revendications

1. Aérodyne à voilure tournante (10), ledit aérodyne comportant :
- un moteur (35) ;
- une structure (11) supportant au moins un siège passager ;
- un rotor (14) disposé au-dessus de ladite structure (11) et relié audit moteur (35) par un arbre de transmission (13) creux, ledit arbre de transmission (13) étant mobile en rotation par rapport à la structure (11) ;
- un mât (30) creux fixé à ladite structure (11) et s'étendant dans ledit arbre de transmission (13) ; et
- un parachute (16) disposé au-dessus dudit rotor (14), ledit parachute (16) étant fixé sur ledit mât (30) et relié à ladite structure (11) au moyen d'un élément de suspension (17) passant dans ledit mât (30) ;
**caractérisé en ce que** ledit élément de suspension (17) est réalisé par un câble multibrins en acier dont la résistance en traction est supérieure à 150 daN/mm², de sorte que, lors d'une dislocation de l'arbre de transmission (13), ledit câble résiste aux sollicitations en cisaillement.

2. Aérodyne selon la revendication 1, **dans lequel** ledit câble (17) présente une souplesse lui permettant de se courber sur un rayon inférieur ou égal à dix fois son diamètre sans atteindre sa limite élastique en flexion.

3. Aérodyne selon la revendication 1 ou 2, **dans** lequel ledit câble (17) présente une limite à la rupture en traction supérieure à dix fois la masse maximum autorisée dudit aérodyne alors qu'une section dudit câble (17) est réduite de 95%.

4. Aérodyne selon l'une des revendications 1 à 3, **dans lequel** ledit parachute (16) intègre un extracteur (18), ledit extracteur (18) étant commandé manuellement depuis une cabine de pilotage de l'aérodyne.

5. Aérodyne selon la revendication 4, **dans lequel** ledit extracteur (18) est commandé par un câble de déclenchement (19) passant dans ledit mât (30).

6. Aérodyne selon la revendication 4, **dans lequel** ledit extracteur (18) est commandé par un contacteur électrique, ledit contacteur électrique étant relié à ladite cabine de pilotage par au moins un fil électrique passant dans ledit mât (30).

7. Aérodyne selon la revendication 4, **dans lequel** ledit extracteur (18) est commandé par des moyens de transmission sans fil.

8. Aérodyne selon l'une des revendications 1 à 7, **dans lequel** ledit parachute (16) intègre un extracteur (18), ledit extracteur (18) étant commandé automatiquement lorsque certains paramètres anormaux sont détectés.

9. Aérodyne selon la revendication 8, **dans lequel** ledit extracteur (18) est réalisé par un dispositif mécanique à percuteur configuré pour assurer l'extraction dudit parachute (16) lorsque ledit rotor (14) présente une accélération latérale supérieure à une valeur seuil.

10. Aérodyne selon la revendication 8, **dans lequel** ledit extracteur (18) est réalisé par un dispositif électromécanique à commutateur configuré pour assurer l'extraction dudit parachute (16) lorsque ledit rotor (14) présente une accélération latérale supérieure à une valeur seuil.

11. Aérodyne selon la revendication 8, **dans lequel** ledit extracteur (18) est réalisé par un dispositif électronique configuré pour assurer l'extraction dudit parachute (16) lorsque ledit aérodyne (10) présente une accélération angulaire supérieure à une valeur seuil.

12. Aérodyne selon l'une des revendications 1 à 11, **dans lequel** ledit câble de suspension (17) est fixé à ladite structure (11) par au moins deux liens de fixation (20, 21) reliés à deux points de fixation distincts de ladite structure (11).

## Patentansprüche

1. Tragschrauber (10), wobei dieser Tragschrauber enthält:
- einen Motor (35);
- einen Rahmen (11), der mindestens einen Passagiersitz trägt;
- einen Rotor (14), angeordnet über diesem Rahmen (11) und mit dem erwähnten Motor (35) über eine hohle Antriebswelle (13) verbunden, diese Antriebswelle (13) ist bezogen auf den Rahmen (11) in Rotation beweglich;
- einen Hohlmast (30), der an diesem Rahmen (11) befestigt ist und in diese Antriebswelle (13) reicht; und
- einen Fallschirm (16), angeordnet über diesem Rotor (14), wobei dieser Fallschirm (16) am erwähnten Mast (30) befestigt und mit dem erwähnten Rahmen (11) über ein Aufhängungselement (17) befestigt ist, das in den erwähnten Mast (30) hineinführt;
***dadurch gekennzeichnet, dass*** dieses Aufhängungselement (17) aus einem vieladrigen Stahlseil besteht, dessen Zugfestigkeit höher als 150 daN/mm ist, so dass bei einer Dislokation der Antriebswelle (13), dieses Kabel den Scherbeanspruchungen widersteht.

2. Tragschrauber nach Anspruch 1, ***bei dem*** dieses Seil (17) eine Flexibilität aufweist, die es ihm ermöglicht sich mit einem Radus von kleiner oder gleich dem zehnfachen seines Durchmessers zu krümmen, ohne seine elastische Biegefestigkeitsgrenze zu erreichen.

3. Tragschrauber nach Anspruch 1 oder 2, ***bei dem*** dieses Seil (17) einen Reißfestigkeitsgrenzwert aufweist, der höher ist als das Zehnfache des zulässigen Höchstgewichtes dieses Tragschraubers während eine Sektion dieses Seils (17) um 95% verringert wird.

4. Tragschrauber nach einem der Ansprüche 1 bis 3, ***bei dem*** der erwähnte Fallschirm (16) einen Hilfsschirm (18), enthält, dieser Hilfsschirm (18) wird dabei manuell von einer Steuerkabine des Tragschraubers aus gesteuert.

5. Tragschrauber nach Anspruch 4, **bei dem** dieser Hilfsschirm (18) über ein Auslöseseil (19) gesteuert wird, das in den erwähnten Mast (30) führt.

6. Tragschrauber nach Anspruch 4, ***bei dem*** dieser Hilfsschirm (18) durch einen elektrischen Schalter gesteuert wird, dieser elektrische Schalter ist mit der Steuerkabine über mindestens eine elektrische Leitung verbunden, die in diesen Mast (30) führt.

7. Tragschrauber nach Anspruch 4, ***bei dem*** dieser Hilfsschirm (18) über drahtlose Übertragungselemente gesteuert wird.

8. Tragschrauber nach einem der Ansprüche 1 bis 7, ***bei dem*** der erwähnte Fallschirm (16) einen Hilfsschirm (18), enthält, dieser Hilfsschirm (18) wird dabei automatisch gesteuert, wenn bestimmte anomale Parameter entdeckt werden.

9. Tragschrauber nach Anspruch 8, bei dem dieser Hilfsschirm (18) über eine mechanische Schlagvorrichtung ausgeführt ist, konfiguriert um die Entfaltung des erwähnten Fallschirms (16) sicherzustellen, wenn der erwähnte Rotor (14) eine über einem Schwellenwert liegende seitliche Beschleunigung aufweist.

10. Tragschrauber nach Anspruch 8, bei dem dieser Hilfsschirm (18) über eine elektromechanische Vorrichtung mit Schalter ausgeführt ist, konfiguriert um die Entfaltung des erwähnten Fallschirms (16) sicherzustellen, wenn der erwähnte Rotor (14) eine über einem Schwellenwert liegende seitliche Beschleunigung aufweist..

11. Tragschrauber nach Anspruch 8, bei dem dieser Hilfsschirm (18) durch eine elektronische Vorrichtung ausgeführt ist, konfiguriert um die Entfaltung des erwähnten Fallschirms (16) sicherzustellen, wenn der erwähnte Tragschrauber (10) eine über einem Schwellenwert liegende Winkelbeschleunigung aufweist.

12. Tragschrauber nach einem der Ansprüche 1 bis 11, bei dem dieses Aufhängungskabel (17) mit dem erwähnten Rahmen (11) über mindestens zwei Befestigungsleinen (20, 21) befestigt ist, die an zwei unterschiedlichen Befestigungspunkten mit dem erwähnten Rahmen (11) verbunden sind.

## Claims

1. A rotary-wing aerodyne (10), the said aerodyne comprising:
- a motor (35);
- a structure (11) supporting at least one passenger seat;
- a rotor (14) arranged above the said structure (11) and linked to the motor (35) by a hollow transmission shaft (13), the transmission shaft (13) being movable in rotation in relation to the structure (11);
- a hollow mast (30) attached to the structure (11) and extending through the transmission shaft (13); and
- a parachute (16) arranged above the rotor (14), the parachute (16) being attached to the mast (30) and linked to the structure (11) by means of a suspension element (17) passing through the mast (30);
**characterised in that** the said suspension element (17) is produced from a multi-strand steel cable with a tensile strength of greater than 150 daN/mm² in order that the cable resist to the shearing efforts during the dislocation of the transmission shaft.

2. The aerodyne according to claim 1, **wherein** the said cable (17) has a flexibility enabling it to be curved over a radius of less than or equal to 10 times the diameter thereof without reaching the bending elastic limit thereof.

3. The aerodyne according to claim 1 or 2, **wherein** the said cable (17) has a tensile breaking strength of more than 10 times the maximum authorized weight of said aerodyne even though a cross-section of said cable (17) is reduced by 95%.

4. The aerodyne according to any one of claims 1 to 3, **wherein** the said parachute (16) incorporates an extractor (18), said extractor (18) being manually controlled from a cockpit of the aerodyne.

5. The aerodyne according to claim 4, **wherein** the said extractor (18) is controlled by a ripcord (19) passing through said mast (30).

6. The aerodyne according to claim 4, **wherein** the said extractor (18) is controlled by an electrical switch, said electrical switch being connected to said cockpit by at least one electric wire passing through said mast (30).

7. The aerodyne according to claim 4, **wherein** the said extractor (18) is controlled by wireless transmission means.

8. The aerodyne according to any one of claims 1 to 7, **wherein** the said parachute (16) incorporates an extractor (18), said extractor (18) being controlled automatically when certain abnormal parameters are detected.

9. The aerodyne according to claim 8, **wherein** the said extractor (18) is achieved by a mechanical percussion device configured such as to ensure the extraction of the said parachute (16) when the rotor (14) has a lateral acceleration greater than a threshold value.

10. The aerodyne according to claim 8, **wherein** the said extractor (18) is achieved by a switch-controlled electro-mechanical device configured such as to ensure the extraction of said parachute (16) when the said rotor (14) has a lateral acceleration greater than a threshold value.

11. The aerodyne according to claim 8, **wherein** the said extractor (18) is achieved by an electronic device configured such as to ensure the extraction of the said parachute (16) when the said aerodyne (10) has an angular acceleration greater than a threshold value.

12. The aerodyne according to any one of claims 1 to 11, **wherein** the said suspension cable (17) is attached to said structure (11) by at least two attachment tethers (20, 21) connected to two different attachment points of said structure (11).
